(19) Europäisches Patentamt
European Patent Office
Office européen des brevets

(11) Publication number: 0 170 486 A2

(12) EUROPEAN PATENT APPLICATION

(21) Application number: 85305252.0

(51) Int. Cl.⁴: C 01 B 33/28

(22) Date of filing: 24.07.85

(30) Priority: 26.07.84 US 634859

(43) Date of publication of application: 05.02.86 Bulletin 86/6

(84) Designated Contracting States: BE DE FR GB IT NL SE

(71) Applicant: MOBIL OIL CORPORATION
150 East 42nd Street
New York New York 10017(US)

(72) Inventor: Chu, Pochen
1173 Ollerton Road
West Deptford New Jersey 08066(US)

(72) Inventor: LaPierre, Rene Bernard
43 Arrowhead Court
Medford New Jersey 08055(US)

(74) Representative: West, Alan Harry
Mobil Court 3 Clements Inn
London WC2A 2EB(GB)

# (54) Production of zeolite ZSM-5.

(57) ZSM-50 and zeolite beta are effective seeds for inducing rapid crystallization of ZSM-5.

EP 0 170 486 A2

Croydon Printing Company Ltd

F-2899

PRODUCTION OF ZEOLITE ZSM-5

The present invention relates to the production of the crystalline zeolite ZSM-5.

The crystalline zeolite known as ZSM-5 is particularly described in United States Patent No. 3,702,886. ZSM-5 crystalline aluminosilicate is characterized by a silica-to-alumina mole ratio of greater than 5 and more precisely in the as synthesized, anhydrous state by the general formula:

$$[0.9 \pm 0.2\ M_{2}/_{n}O:Al_{2}O_{3}:>5\ SiO_{2}]$$

wherein M is selected from alkali metal cations and organo ammonium cations, particularly a mixture of sodium and tetraalkyl ammonium cations, the alkyl groups of which preferably contain 2 to 5 carbon atoms. The term "anhydrous" as used in the above context means that molecular water is not included in the formula. In general, the mole ratio of $SiO_2$ to $Al_2O_3$ for a ZSM-5 zeolite can vary widely. For example, ZSM-5 zeolites can be aluminum-free in which the ZSM-5 is formed from an alkali mixture of silica containing only impurities of aluminum. All zeolites characterized as ZSM-5, however, will have the characterisitic X-ray diffraction pattern set forth in United States Patent No. 3,702,886 regardless of the aluminum content of the zeolite.

Seeding as a means for inducing crystallization is a very old technique. In the art of zeolite manufacture, various patents describe the use of seeding to induce the rapid crystallization of zeolites. Various patents describing the manufacture of zeolite crystals by seeding with a zeolite include: United Kingdom Patent No. 1,297,256, in making ZSM-4; United States Patent No. 3,247,194, in making ZK-5; United States Patent No. 3,733,391, in making faujasite; and United States Patent No. 4,007,253, in making faujasite in which the seed is not the same as the product. Patents

disclosing the formation of zeolites by seeding with other aluminosilicates include: United Kingdom Patent No. 1,117,568, in making ZSM-4; United Kingdom Patent No. 1,160,463, in making faujasite; United States Patent No. 3,578,398, in making a zeolite similar to offretite; and United States Patent No. 3,947,482, in making various zeolites.

United States Patent No. 4,275,047 (Whittam) discloses a method of making a zeolite of the ZSM-5 family by reacting an alkali mixture comprising an alumina source, a silica source and alkali metal ions in the presence of a seed quantity of a zeolite having a pore diameter generally equal to that of the required zeolite . Zeolites that can be used as seeds include members of the ZSM-5 family, zeolite nu-1 described in United States Patent No. 4,060,590 and zeolite FU-1 described in United States Patent No. 4,209,498. Other examples of zeolites useful as set forth in the Whittam patent include brewsterite, clinoptilolite, dachiardite, epistilbite, ferrierite, heulandite and stilbite, as well as ZSM-35 and ZSM-38.

In accordance with the present invention, there is provided a method making zeolite ZSM-5 by reacting an alkaline mixture comprising a silica source with or without an alumina source until the required zeolite has been formed, wherein the method comprises reacting said mixture in the presence of a seed quantity of a crystallized zeolite selected from ZSM-50 and zeolite-beta.

Using the above seed crystals is found to accelerate the crystallization of the ZSM-5. The fact that sorption data indicate that ZSM-50 and zeolite Beta possess pore sizes significantly larger than those of ZSM-5 yet still accelerate crystallization of ZSM-5 is unexpected. The fast crystallizaton is achieved by the elimination of the nucleation period. Unexpectedly, seeding in accordance with the present invention also results in the formation of smaller size ZSM-5 crystals than those obtained when seeds are absent.

ZSM-5 has the characteristic X-ray diffraction pattern set forth in Table 1 of United States Patent No. 3,702,886, regardless of whether the ZSM-5 has been produced with a source of alumina,

without the addition of an aluminum source, or wherein the aluminum is replaced in part or entirely by gallium, iron, boron, phosphorus, chromium or mixtures thereof.

Generally, ZSM-5 is prepared from an aqueous reaction mixture of tetraalkyl ammonium hydroxide, sodium hydroxide, an oxide of aluminum and an oxide of silica having a composition in terms of mole ratio of oxides, faling within the following ranges:

| | Broad | Preferred | Particularly Preferred |
|---|---|---|---|
| $OH^-/SiO_2$ | 0.07-1.0 | 0.1-0.8 | 0.2-0.75 |
| $R_4N^+/(R_4N^+ + Na^+)$ 0.4-0.9 | | 0.2 -0.95 | 0.3-0.9 |
| H2O/$OH^-$ | 10-300 | 10-300 | 10-300 |
| $SiO_2/Al_2O_3$ | 5 | 5-300 | 15-300 |

where R is propyl. Alternatively, there may be employed: an amine, suitably tri-n-propyl amine; quaternary alkyl ammonium salts such as, tetra-n-propyl ammonium bromide or a mixture of tri-n-propyl amine and n-propyl bromide, dissolved in a suitable solvent such as methylethyl ketone. Typical conditions maintained during crystallization include a temperature within the range of 75°C to 250°C, preferably 90°C to 160°C.

The zeolites that can be used as seeds in accordance with the present method are ZSM-50 and zeolite beta. Zeolite-beta and its preparation are described in United States Patent No. 3,308,069.

Conventional zeolite ZSM-50 is characterized, in terms of moles of oxides per 100 moles of silica on an anhydrous basis, as follows:

$$(0\text{-}10)M_{2/n}O:(1\text{-}5)Al_2O_3:(100)SiO_2$$

wherein M is at least one cation having a valence n, and wherein the zeolite is characterized by a distinctive X-ray diffraction pattern substantially as shown in Table 1 below.

TABLE 1

| Interplanar d-Spacing (A) | Relative Intensity, $I/I_0$ |
|---|---|
| 20.1 ± .3 | W |
| 11.1 ± .17 | S |
| 10.1 ± .16 | M |
| 9.7 ± .14 | W |
| 5.77 ± .09 | W |
| 5.61 ± .09 | W |
| 4.64 ± .07 | M |
| 4.35 ± .07 | M |
| 4.30 ± .07 | VS |
| 4.00 ± .06 | S |
| 3.85 ± .06 | M |
| 3.70 ± .06 | M |
| 3.42 ± .05 | W |
| 3.35 ± .05 | W |
| 3.27 ± .05 | M |
| 3.24 ± .05 | W |
| 2.94 ± .04 | W |
| 2.53 ± .04 | W |

These values were determined by standard techniques. The radiation was the K-alpha doublet of copper and a diffractometer equipped with a scintillation counter and an associated computer was used. The peak heights, I, and the positions as a function of 2 theta, where theta is the Bragg angle, were determined using algorithms on the computer associated with the spectrometer. From these, the relative intensities, 100 $I/I_0$, where $I_0$ is the intensity of the strongest line or peak, and d (obs.) the interplanar spacing in Angstrom Units (A), corresponding to the recorded lines, were determined. In Table 1, the relative intensities are given in terms of the symbols W=weak, M=medium, S=strong and VS=very strong. In terms of intensities, these may be generally designated as follows:

W = 0 - 20

M = 20 - 40

S = 40 - 60

VS = 60 - 100

In the conventionally synthesized form, zeolite ZSM-50 has a formula, on an anhydrous basis and in terms of moles of oxides per 100 moles of silica, as follows:

$$(0\text{-}4)R_2O:(0\text{-}10)M_{2/n}O:(1\text{-}5)Al_2O_3:(100)SiO_2$$

wherein M is an alkali or alkaline earth metal, n is the valence of M, and R is an organic cation of a diquaternary directing agent compound generally expressed by the following formula:

$$X(CH_3)_3N(CH_2)_6N(CH_3)_3X$$

wherein X is an anion, e.g. halide, such as iodide.

Conventional zeolite ZSM-50 can be prepared from a reaction mixture containing sources of an alkali or alkaline earth metal oxide, an oxide of aluminum, an oxide of silicon, an organic cation and water and having a composition, in terms of mole ratios of oxides, within the following ranges:

| Reactants | Useful | Preferred |
|---|---|---|
| $SiO_2/Al_2O_3$ | 20-100 | 30-90 |
| $OH^-/SiO_2$ | 0.1-0.6 | 0.1-0.3 |
| $R/SiO_2$ | 0.05-0.6 | 0.1-0.3 |
| $M/SiO_2$ | 0.01-1.0 | 0.1-0.6 |

wherein M is an alkali or alkaline earth metal and R is an organic cation derived from the above identified diquaternary directing agent compound.

Crystallization of conventional zeolite ZSM-50 can be carried out at either static or stirred condition in a suitable reactor vessel, such as for example, polypropylene jars or teflon lined or stainless steel autoclaves. The temperatures of crystallization is generally from 100°C to 200°C for a time of 48 hours to 15 days. Thereafter, the crystals are separated from the liquid and recovered.

Recently zeolite ZSM-50 has been crystallized with a high silica to alumina ratio from a reaction mixture containing sources of alkali metal oxide, an organic nitrogen-containing cation, an oxide of silicon, water and, optionally, an oxide of aluminum and having a composition, in terms of mole ratios, within the following ranges:

| | Broad | Preferred |
|---|---|---|
| $SiO_2/Al_2O_3$ | $\geq 250$ | $\geq 250-\infty$ |
| $H_2O/SiO_2$ | 5.6-150 | 7.2-80 |
| $OH^-/SiO_2$ | 0.08-0.3 | 0.09-0.2 |
| $M/SiO_2$ | 0.08-0.3 | 0.09-0.2 |
| $R/SiO_2$ | 0.05-1.0 | 0.08-0.67 |

wherein R is dibenzyldimethylammonium and M is an alkali metal ion. The ratio of silica/alumina in the reaction mixture may be infinity or as close thereto as possible. The quantity of $OH^-$ is calculated only from the inorganic sources of alkali without any organic base contribution. Reaction conditions involve heating the foregoing reaction mixture to a temperature of from 80°C to 175°C for a period of time of from 24 hours to 120 days. A more preferred temperature range is from 150°C to 160°C with the amount of time at a temperature in such range being from 24 hours to 8 days.

The seed zeolite can be introduced in any convenient form, provided it does not include constituents, such as polyvalent ions, that are capable at the concentration used of interfering with the synthesis reaction. The seed may be the immediate solid product of synthesis or may be in a form from which alkali metal ions have been removed by ion exchange, or may be in a form from which organic compounds may be used in the synthesis have been removed by chemical treatment such as by oxidation, or may be in the ammonium or hydrogen form. Re-exchange with cations will, or course, take place in the synthesis mixture, and so will rehydration if the seed is initially in dehydrated form.

If the ZSM-5 zeolite is desired in the form of an aluminosilicate, the aluminum source in the reaction mixture is most conveniently sodium aluminate, but can be aluminum salt, for example, the chloride or sulfate or alumina itself, which should be a hydrated or hydratable form such as colloidal alumina, pseudobohmite, bohmite, gamma-alumina or the alpha or beta trihydrate. More than one source can be used if desired.

The silica source can be of any type having sufficient chemical reactivity to take part in the zeolite synthesis at adequate rate. Suitably it is a water-soluble or dissolved silicate such as a water glass or sodium metasilicate hydrate, sesquisilicate or disilicate, whether of the so-called "active" type or not. Alternatively, it can be a colloidal silica, for example, as sold under the trade name LUDOX, NALCOAG or SYTON which typically contain 20 to 50 percent w/w of silica in aqueous suspension.

The seed zeolite can be added to the ZSM-5 forming mixture at any stage before crystallization begins, but is preferably added during the induction period after which unwanted products may begin to crystallize.

As a result of the use of the seed zeolites, the time and/or temperature of reaction can be decreased from those previously published for making zeolite ZSM-5. Thus, for example, whereas in making zeolite ZSM-5 by the methods described in the examples of United States Patent No. 3,702,886, the reaction takes 5 to 8 days at 149°C to 170°C, reaction times of 8 to 24 hours at 100°C are typical for the present method.

After the zeolite synthesis reaction, the product can be subjected to any of the usual steps of washing, drying, calcination and ion exchange, such as are used in producing useful absorbents and/or catalysts.

The following example illustrates the process of the present invention.

EXAMPLE

A gel was prepared by mixing 288g of LUDOX AS-40, 12g of NaOH, 30g of tetrapropyl ammonium bromide in 538g of water. Seed crystals of various zeolites were added to the gel and blended into a homogenous slurry. The mixture was then heated to 100°C (212°F). Samples were periodically withdrawn, filtered, washed, dried, and submitted for crystallinity determination by X-ray. The results are summarized in Table 2.

Referring to Table 2, it can be seen that not all zeolites tested were useful in the rapid crystallization of ZSM-5. For example, it can be seen that ZSM-23, while considered a zeolite of ZSM-5 type was not effective in enhancing the rapid crystallization of ZSM-5. Note further that a large pore sodium Y was not as effective in decreasing the time of crystallization as zeolite beta, another large pore zeolite.

TABLE 2

Crystallizations of ZSM-5 with Seeds

| Seed Type | | ZSM-5 | ZSM-11 | ZSM-beta | ZSM-beta | ZSM-beta | ZSM-50 | ZSM-12 | ZSM-23 | NaY | None |
|---|---|---|---|---|---|---|---|---|---|---|---|
| % Seeds on Total $SiO_2$ | | 5 | 5 | 5 | 10 | 50 | 5 | 5 | 5 | 5 | 0 |
| Crystallinily at | 1 Hr. | | | | | 55% B | | | | | |
| | 3 Hr. | 20% | Some C | | | 55% B | | | | | |
| | 6 Hr. | 75% C | | | | | | | | | |
| | 8 Hr. | | 30% C | | 40% C | 60% B + C | A | | | | |
| | 14 Hr. | | | | 100% C | | | | | | |
| | 16 Hr. | | | 60% C | | | | | | | |
| | 18 Hr. | | | | | Some C | | | | | A |
| | 24 Hr. | 100% C | 100% C | | 115% C | 80% C + B | | A | A | A | A |
| | 60 Hr. | | | 120 % C | | | | | | | 45% C |
| | 80 Hr. | | | | | | 105% C | 110% C | 115 % C | 110% C | 110% C |

A - Mainly amorphous, may contain trace of unidentified.

B - ZSM-beta

C - ZSM-5

WHAT IS CLAIMED IS

1. A method of making zeolite ZSM-5 by reacting an alkaline mixture comprising a silica source with or without an alumina source until the required zeolite is formed, wherein said mixture is reacted in the presence of a seed quantity of a crystalline zeolite selected from ZSM-50 having the X-ray diffraction pattern show in Table 1, and zeolite-beta.

2. The method according to claim 1 in which the mixture contains 0.1 to 50 weight percent of the seed zeolite relative to the silica content of the mixture.

3. The method according to claim 1 in which the mixture contains 1.0 to 10 weight percent of the seed mixture relative to the silica content of the mixture.

4. The method according to any preceding claim in which said seed zeolite is beta.

5. The method according to any preceding claim wherein said seed zeolite is ZSM-50 having the X-ray diffraction pattern shown in Table 1.

6915H/